# EUROPÄISCHE PATENTANMELDUNG

(11) **EP 4 654 405 A1**
(43) Veröffentlichungstag der Anmeldung: **26.11.2025**
(21) Anmeldenummer: 25177421.2
(22) Anmeldetag: 19.05.2025
(51) Int. Cl.: H02G 3/04, B60L 53/30, H02G 3/10

(54) **STELE FÜR EINE WANDLADESTATION ZUM AUFLADEN EINES ELEKTRISCHEN KRAFTFAHRZEUGS**

(30) Priorität: 23.05.2024 DE 102024001663; 15.01.2025 DE 102025000120
(71) Anmelder: T-FLX GmbH, 44227 Dortmund (DE)
(72) Erfinder: Kachouh, Checrallah, 44227 Dortmund (DE)

(57) **Zusammenfassung**

Die Erfindung betrifft eine Stele (10) für eine Wandladestation zum Aufladen eines elektrischen Kraftfahrzeugs mit einem Fußbereich (11) zum Befestigen der Stele (10) auf einem Boden,
mit einem Innenraum (12) zum Anordnen von elektrischen Leitungen ( 61, 62, 65, 67),
und mit zumindest einem Befestigungsbereich (40, 42) zum Befestigen der Wandladestation an der Stele (10). Erfindungsgemäß ist vorgesehen, dass der Befestigungsbereich (40, 42) derart ausgebildet ist, dass Ausnehmungen (70, 72) zur Montage der Wandladestation in den Befestigungsbereich (40, 42) einbringbar sind.

## Beschreibung

Die Erfindung betrifft eine Stele für mindestens eine Wandladestation zum Aufladen eines elektrischen Kraftfahrzeugs. Die Stele umfasst einen Fußbereich zum Befestigen der Stele auf einem Boden und einen Innenraum zum Anordnen von elektrischen Leitungen. Die Stele umfasst zudem zumindest einem Befestigungsbereich zum Befestigen der Wandladestation an der Stele. Die Erfindung betrifft des Weiteren eine Ladebaugruppe mit der erfindungsgemäßen Stele und der daran befestigten Wandladestation sowie ein Verfahren zur Montage einer erfindungsgemäßen Ladebaugruppe.

Von der Firma Pro Charge ist eine derartige Stele bekannt. Über dem Innenraum befindest sich ein Befestigungsbereich, an dem zunächst eine Halterungsplatte befestigt werden muss. An der Halterungsplatte kann dann wiederum die Wandladestation, auch Wallbox genannt, befestigt werden. Die Halterungsplatte muss für die Wandladestation vorkonfiguriert sein. Wandladestationen ohne vorkonfigurierte Halterungsplatte können nicht montiert werden. Soll eine Wandladestation eines anderen Typs an der Stele befestigt werden, so muss die Halterungsplatte durch die korrekte, vorkonfigurierte Halterungsplatte ausgetauscht werden. Dieses ist fehleranfällig. Zudem ist in dem Befestigungsbereich eine ausgedehnte Ausnehmung zum Durchführen von Kabeln mehrerer Typen von Wandladestation vorgesehen. Hierdurch können sich Probleme bei der Abdichtung des Innenraums ergeben.

Es ist daher die Aufgabe der vorliegenden Erfindung eine Stele zur Verfügung zu stellen, die zumindest eine der oben genannten Nachteile verringert, insbesondere eine Stele zur Verfügung zu stellen, bei der einfach verschiedene Typen von Wandladestationen installiert werden können. Es ist insbesondere eine weitere Aufgabe der Erfindung, eine Ladebaugruppe und ein Verfahren zur Montage einer Ladebaugruppe zur Verfügung zu stellen, deren Befestigungsbereich einen auf den Typ der Wandladestation abgestimmte Ausnehmungen aufweist.

Diese Aufgabe wird durch den Patentanspruch 1 gelöst. Vorteilhafte Ausführungen sind in den abhängigen Ansprüchen, der Beschreibung und in den Figuren angegeben.

Erfindungsgemäß ist vorgesehen, dass der Befestigungsbereich derart ausgebildet ist, dass Ausnehmungen zur Montage der Wandladestation in den Befestigungsbereich einbringbar sind. Hierbei wird unter einbringbar insbesondere verstanden, dass ein Installateur an dem Montageort Ausnehmungen einbringen kann. Beispielsweise kann der Befestigungsbereich so ausgebildet sein, dass die Ausnehmungen durch eine Handbohrmaschine, insbesondere einen Bohrschrauber, den der Installateur der Wandladestation mitführt, einbringbar sind. Bei dem Bohrschrauber kann es sich z. B. um einen Bohrschrauber mit einem Drehmoment zwischen 20 und 150 Nm handeln. Es kann auch sein, dass der Installateur selbstschneidende Schrauben in den Befestigungsbereich eindreht und hierdurch Ausnehmungen einbringt.

Dadurch, dass, insbesondere am Montageort, die Ausnehmungen in den Befestigungsbereich einbringbar sind, kann der Installateur beliebige Wandladestationen an der Stele ohne weitere Vorbereitungen installieren. Hierbei kann der Installateur bei der Montage der Wandladestation die Ausnehmungen passend zu der mitgeführten Wandladestation in den Befestigungsbereich einbringen. Dadurch, dass die Ausnehmungen passend für die tatsächlich zu installierende Wandladestation sind, können die Ausnehmungen die für die Wandladestation passende räumliche Ausdehnungen haben. Das heißt, dass die Ausnehmungen nicht überdimensioniert sein müssen. Hierdurch werden ebenfalls nicht benötigte Ausnehmungen vermieden.

Eine Wandladestation ist auch unter dem Begriff Wallbox bekannt. Die Wandladestation ist u.a. für die Installation auf einer Wand konzipiert und dient dazu, eine Batterie eines elektrischen Kraftfahrzeugs, insbesondere eines Elektroautos, aufzuladen. Die Wandladestation umfasst ein eigenes Gehäuse und Verbindungsmittel, um eine elektrische Verbindung zu einem oder mehreren Elektrofahrzeug(en) aufzubauen, z. B. zumindest einen Stecker oder zumindest eine Buchse. Die Stele ist bevorzugt vorgesehen, freistehend auf dem Boden befestigt zu werden. Nach der Installation ist eine elektrische Leitung, z. B. eine Hauptleitung, insbesondere durch den Boden in die Stele eingeführt. Eine elektrische Leitung, z. B. eine Abzweigleitung, ist im installierten Zustand der Ladebaugruppe durch den Befestigungsbereich zu der Wandladestation geführt. Mittels der Stele kann die Wandladestation auch ohne eine Wand installiert werden.

Die Stele dient dazu, eine Wandladestation zu tragen. Die Stele selbst umfasst bevorzugt keinen Stecker oder keine Buchse, um ein Elektrofahrzeug anzuschließen.

Als Ladebaugruppe wird die Stele mit den eingebrachten Ausnehmungen und der an der Stele montierten Wandladestation bezeichnet. Hierbei ist die Wandladestation elektrisch und/oder kommunikationstechnisch angeschlossen.

Es kann vorgesehen sein, dass der Befestigungsbereich aus einem Material mit einem Zug-Elastizitätsmodul von weniger als 50.000 MPa, besonders bevorzugt weniger als 30.000 MPa ausgebildet ist. Es kann sein, dass das Material des Befestigungsbereichs ein Zug-Elastizitätsmodul von mindestens 1000 MPa, bevorzugt zumindest 3000 MPa aufweist. Hierbei sind die Werte des Zug-Elastizitätsmodul bei Raumtemperatur angegeben. Die Werte für das Zug-Elastizitätsmodul können gemäß ISO 527(2019) bestimmt werden.

Insbesondere ist der Befestigungsbereich aus einem Kunststoff, beispielsweise PVC (Polyvinylchlorid), oder aus einem Hochdrucklaminat, beispielsweise HPL, ausgebildet. Gerade die Ausbildung aus einem Kunststoff oder aus einem Hochdrucklaminat ermöglicht die gute Einbringbarkeit der Ausnehmungen als auch die nötige Festigkeit zum Halten der Wandladestation. Zudem entfällt eine Erdung des Befestigungsbereichs.

Mit besonderem Vorteil wird UV-beständiger Kunststoff oder UV-beständiges Hochdrucklaminat für den Befestigungsbereich verwendet. Hierbei wird insbesondere als UV-beständiger Kunststoff bzw. Hochdrucklaminat ein gemäß ISO 4892-2 (2013) geprüfter Kunststoff bzw. Hochdrucklaminat verstanden.

Die Ausnehmungen, die in den Befestigungsbereich einzubringen sind und im installierten Zustand in dem Befestigungsbereich eingebracht sind, dienen bevorzugt unterschiedlichen Zwecken. Zumindest eine, bevorzugt mehrere der Ausnehmungen, dienen zum Befestigen der Wandladestation an der Stele. Beispielsweise kann die Wandladestation an der Stele angeschraubt werden. Die Ausnehmungen zum Befestigen können beispielsweise durch selbstschneidende Schrauben eingebracht worden sein und/oder selbstschneidende Schrauben halten.

Zumindest eine der Ausnehmungen dient zum Durchführen von zumindest einer elektrischen Leitung von dem Innenraum zu der Wandladestation.

Bevorzugt ist der Befestigungsbereich der erfindungsgemäßen Stele vor dem Einbringen der Ausnehmungen ohne Ausnehmungen zur Montage der Wandladestation, deren maximale Ausdehnung eine Länge von 20 mm, bevorzugt von 10 mm überschreitet, ausgestaltet. Bei runden Ausnehmungen können vor dem Einbringen der Ausnehmungen Ausnehmungen zur Montage der Wandladestation mit einem Durchmesser von mehr als 20 mm, bevorzugt mehr als 10 mm fehlen. D. h. zu Beginn der Installation der Stele vor Ort sind in dem Befestigungsbereich höchstens Ausnehmungen mit einer Länge unter 20 mm, bevorzugt unter 10 mm, vorhanden. Hierdurch fehlt es zu Beginn der Installation zumindest an einer Ausnehmung zum Durchführen von elektrischen Leitungen. Besonders bevorzugt ist der Befestigungsbereich zu Beginn der Installation ohne Ausnehmungen zur Montage der Wandladestation ausgebildet. In der fertig installierten Ladebaugruppe hingegen sind die Ausnehmungen zur Montage der Wandladestation eingebracht, jedoch erfindungsgemäß passend zu der installierten Wandladestation.

Es kann sein, dass vor Einbringen der Ausnehmungen zur Montage der Wandladestation der Befestigungsbereich zumindest eine Ausbuchtung oder zumindest ein Loch zur Befestigung des Befestigungsbereichs an der übrigen Stele umfasst.

Es kann vorgesehen sein, dass die Stele zumindest einen ersten und einen zweiten Befestigungsbereich umfasst, wobei der erste und der zweite Befestigungsbereich jeweils zur Befestigung einer Wandladestation vorgesehen sind. D. h. an der fertig installierte Ladebaugruppe können eine erste und eine zweite Wandladestation befestigt sein.

Zusätzlich oder alternativ kann vorgesehen sein, dass der Befestigungsbereich bzw. zumindest einer der beiden Befestigungsbereiche derart räumlich groß ausgebildet ist, dass eine Wandladestation für mehrere Kraftfahrzeuge daran befestigbar ist.

Der erste und der zweite Befestigungsbereich können an unterschiedlichen, insbesondere gegenüberliegenden, Seiten der Stele ausgebildet sein. Der erste und der zweite Befestigungsbereich können jeweils wie zuvor beschrieben ausgebildet sein. Der erste und der zweite Befestigungsbereich können insbesondere in Bezug auf das Zug-Elastizitätsmodul, die Ausbildung aus Kunststoff oder aus Hochdrucklaminat und/oder die Ausnehmungen zur Montage der Wandladestation wie zuvor beschrieben ausgebildet sein.

Bevorzugt weist die Stele einen gemeinsamen Innenraum für den ersten und den zweiten Befestigungsbereich auf. D. h. elektrische Leitungen sind aus demselben Innenraum zu dem ersten und dem zweiten Befestigungsbereich führbar. In dem installierten Zustand, d. h. bei der fertigen Ladebaugruppe, ist zumindest eine elektrische Leitung aus dem Innenraum zu dem ersten Befestigungsbereich geführt. Sind die erste und die zweite Wandladestation montiert, so sind elektrische Leitungen zu dem ersten und dem zweiten Befestigungsbereich der Ladebaugruppe geführt.

Die Stele kann eine Elektrik für die Wandladestation umfasst. Die Elektrik ist bevorzugt in dem Innenraum angeordnet. Bevorzugt ist zwischen dem Befestigungsbereich bzw. den Befestigungsbereichen und der Elektrik ein Trennelement angeordnet ist, um die Elektrik vor Wasser zu schützen. Hierdurch kann eine IP Schutzklasse, wie z.B. IP54 gemäß IEC 60529, erreicht werden. Beispielsweise kann das Trennelement einer Wand entsprechen, die den Befestigungsbereich bzw. die Befestigungsbereiche von dem Innenraum trennt. Alternativ kann das Trennelement zumindest einem Gehäuse entsprechen, das im Innenraum angeordnet ist.

Das Trennelement kann zumindest eine Leitungsdurchführung, bevorzugt mehrere Leitungsdurchführungen umfassen.

Insbesondere kann die Elektrik von dem Befestigungsbereich bzw. den Befestigungsbereichen abgedichtet sein. Die Leitungsdurchführung bzw. die Leitungsdurchführungen umfassen hierzu bevorzugt jeweils ein Abdichtelement, insbesondere eine Kabelverschraubung.

Zusätzlich oder alternativ kann ein Führungselement vorgesehen sein, das das Wasser an der Elektrik vorbeileitet. Das Führungselement kann sich z. B. an die Leitungsdurchführung anschließen.

Bevorzugt ist die Elektrik für die erste und die zweite Wandladestation in dem gemeinsamen Innenraum angeordnet.

Wie bereits erwähnt, kann bei der Ladebaugruppe eine Hauptleitung in den Innenraum eingeführt sein. Die Stele kann entsprechend mit einem offenen Fußbereich zum Einführen der Hauptleitung ausgebildet sein. Klemmen können im Innenraum der Stele angeordnet sein, um die Hauptleitung elektrisch zu kontaktieren.

Die Hauptleitung kann beispielsweise als fünfadrige NYM-Leitung oder als Erdkabel, insbesondere als ein fünfadriges NYY-Erdkabel, ausgebildet sein. Die Hauptleitung ist bevorzugt vorgesehen, in dem Boden verlegt zu sein.

Bevorzugt ist vorgesehen, dass die Stele ausgebildet ist, die Hauptleitung in den Innenraum einzuführen und aus dem Innenraum wieder herauszuführen. Bevorzugt ist die Stele mit einem entsprechend offenem Fußbereich ausgeführt. Die Ladebaugruppe ist mit einer in den Innenraum geführten und aus dem Innenraum wieder herausgeführten Hauptleitung ausgebildet. Hierdurch ist es möglich, mehrere Ladebaugruppen hintereinander an derselben Hauptleitung zu installieren.

Hierbei können sich die Ladebaugruppen mechanisch in Reihe angeordnet werden. Die Wandladestationen der mehreren Ladebaugruppen sind hierbei elektrisch parallel geschaltet.

Bevorzugt ist die Hauptleitung in mehrere, mechanisch separate Hauptleitungsabschnitte unterteilt, insbesondere geschnitten. Somit kann ein Hauptleitungsabschnitt in die Ladebaugruppe hineinführen und ein weiterer Hauptleitungsabschnitt kann aus der Ladebaugruppe herausführen.

Klemmen können im Innenraum der Stele vorgesehen sein, um ein erstes Hauptleitungsabschnittsende und ein zweites Hauptleitungsabschnittsende im Innenraum der Stele elektrisch zu kontaktieren. Die Klemmen sind ausgebildet, das erste und das zweite Hauptleitungsabschnittsende elektrisch miteinander zu verbinden, so dass die elektrisch durchgehende Hauptleitung ausgebildet ist.

Die Elektrik kann eine Anklemmvorrichtung zum Bilden zumindest eines elektrischen Abzweigs von der Hauptleitung umfassen. Die Hauptleitung ist hierbei im installierten Zustand der Stele oder der Ladebaugruppedurch den Boden in den Innenraum geführt.

Die Anklemmvorrichtung ist ausgebildet, die, insbesondere abschnittsweise ausgebildete, Hauptleitung elektrisch zu kontaktieren. Hierzu kann die Anklemmvorrichtung Klemmen umfassen.

Die Anklemmvorrichtung ist bevorzugt im Innenraum der Stele angeordnet.

Bevorzugt umfasst die Stele zumindest eine Abzweigleitung. Die Abzweigleitung ist ausgebildet, die Wandladestation elektrisch an die Hauptleitung zumindest mittelbar anzuschließen. Die Abzweigleitung kann z. B. als fünfadrige NYM Leitung ausgebildet zu sein.

Die Abzweigleitung ist ausgebildet, bei der installierten Ladebaugruppe die Wandladestation mit elektrischer Energie zu versorgen.

Die Abzweigleitung kann vorgesehen sein, von dem Innenraum durch das Trennelement, bevorzugt durch Leitungsdurchführungen, besonders bevorzugt durch die Kabelverschraubung bzw. durch eine der mehreren Kabelverschraubungen im Trennelement, zu dem Befestigungsbereich zu führen. Dieses kann insbesondere bei der Ladebaugruppe vorgesehen sein.

Sind ein erster und ein zweiter Befestigungsbereich vorgesehen, so können eine erste und eine zweite Abzweigleitung vorgesehen sein. Die erste und die zweite Abzweigleitungen können jeweils wie zuvor beschrieben ausgebildet sein.

Die Anklemmvorrichtung ist ausgebildet, die zumindest eine Abzweigleitung elektrisch zu kontaktieren. Die Anklemmvorrichtung ist ausgebildet, die zumindest eine Abzweigleitung mit der Hauptleitung elektrisch zu verbinden.

Sind eine erste und eine zweite Abzweigleitung vorgesehen, so können die erste Abzweigleitung und die zweite Abzweigleitung unmittelbar mit der Anklemmvorrichtung elektrisch verbunden zu sein. Die Anklemmvorrichtung kann ausgebildet sein, die erste und die zweite Abzweigleitung mit der Hauptleitung elektrisch zu verbinden. Alternativ wird die erste Abzweigleitung mit der Anklemmvorrichtung unmittelbar elektrisch verbunden und die zweite Abzweigleitung zweigt von der ersten Abzweigleitung ab. Hierzu kann eine Anklemmeinrichtung der Stele dienen. Somit kann zumindest eine Abzweigleitung, insbesondere die erste Abzweigleitung, ausgebildet sein, bei der Ladebaugruppe von der Anklemmvorrichtung zu der Wandladestation zu führen.

Die zweite Abzweigleitung ist insbesondere ausgebildet, bei der installierten Ladebaugruppe von der Anklemmvorrichtung oder von der Anklemmeinrichtung zu der zweiten Wandstation zu führen. Die zweite Abzweigleitung ist ausgebildet, bei der installierten Ladebaugruppe die zweite Wandladestation mit elektrischer Energie zu versorgen.

Es kann vorgesehen sein, dass die Elektrik im Innenraum zumindest einen Überspannungsschutz umfasst. Durch den Überspannungsschutz (SPD) kann die Wandladestation bzw. die Wandladestationen und/oder das Elektrofahrzeug vor einer Überspannung und damit vor Schaden geschützt werden. Bevorzugt ist ein gemeinsamer Überspannungsschutz für die erste Wandladestation und für die zweite Wandladestation oder für die an der ersten und der zweiten Wandladestation angeordneten Elektrofahrzeuge vorgesehen sein. Alternativ ist ein erster Überspannungsschutz für die erste Wandladestation und/oder das an der erste Wandladestation angeordnete Elektrofahrzeug und ein zweiter Überspannungsschutz für die zweite Wandladestation und/oder für das an der zweiten Wandladestation angeordnete Elektrofahrzeug in dem gemeinsamen Innenraum angeordnet.

Bevorzugt umfasst die Elektrik im Innenraum der Stele eine Kommunikationsvorrichtung.

Insbesondere ist die Stele oder die Ladebaugruppe mit einer elektronischen Steuerung verbindbar. Die Kommunikationsvorrichtung ist insbesondere vorgesehen, um elektronische Daten von der zumindest einen Wandladestation zu empfangen und zu der elektronischen Steuerung zu senden und/oder von der elektronischen Steuerung zu empfangen und zu der zumindest einen Wandladestation zu senden. Die elektronische Steuerung kann beispielsweise zum Lastenmanagement dienen. Alternativ oder zusätzlich kann die elektronische Steuerung z. B. das Einschalten und/oder das Ausschalten der zumindest einen Wandladestation steuern. Beispielsweise kann die Wandladestation abhängig von einer Uhrzeit ein- oder ausgeschaltet werden.

Die zumindest eine Wandladestation der Ladebaugruppe kann mit einem Backendsystem elektronisch verbindbar sein. Das Backendsystem kann beispielsweise dazu dienen, elektronische Daten der zumindest einen Wandladestation zu speichern. Die elektronischen Daten können z. B. zur Abrechnung oder zur Verwaltung von Betriebsvorgängen von dem Backendsystem verwendet werden. Das Backendsystem kann mittels der empfangenen elektronischen Daten die zumindest eine Wandladestation überwachen. Die Kommunikationsvorrichtung ist insbesondere vorgesehen, um elektronische Daten zu dem Backendsystem zu senden oder von dem Backendsystem zu empfangen.

Zusätzlich oder alternativ kann die Kommunikationsvorrichtung mit zumindest einer weiteren Kommunikationsvorrichtung einer weiteren Ladebaugruppe kommunizieren.

Insbesondere kann die Kommunikationsvorrichtung zum Anschluss an einen Datenbus vorgesehen sein. Bei dem Datenbus kann es sich um eine Ethernetverbindung handeln. In diesem Fall kann die Kommunikationsvorrichtung als Switch ausgebildet sein.

Alternativ kann es sich bei der Kommunikationsvorrichtung um ein Powerline-Modem (PLC-Modem) oder ein Powerline-Adapter handeln. Insbesondere kann die Kommunikationsvorrichtung ausgebildet sein, elektronische Daten über die Hauptleitung zu empfangen und/oder zu senden. Die elektronische Kommunikation über die Hauptleitung kann erfolgen, um elektronische Daten zu der elektronischen Steuerung und/oder zu dem Backendsystem und/oder zu einer anderen Kommunikationsvorrichtung zu senden und/oder zu empfangen.

Die als PLC-Modem oder als PLC-Adaper ausgebildete Kommunikationsvorrichtung kann bevorzugt ausgebildet sein, im installierten Zustand mit zumindest zwei Leitern der Hauptleitung elektrisch verbunden zu sein. Insbesondere ist die als PLC-Modem oder PLC-Adapter ausgebildete Kommunikationsvorrichtung ausgebildet, im installierten Zustand mit einem Außenleiter und einem Nullleiter der Hauptleitung elektrisch verbunden zu sein. Alternativ ist die Kommunikationsvorrichtung ausgebildet, im installierten Zustand mit einem Außenleiter und einem PE-Leiter elektrisch verbunden zu sein.

Alternativ kann die Kommunikationsvorrichtung ausgebildet sein, im installierten Zustand mit einem ersten Außenleiter und mit einem zweiten Außenleiter der Hauptleitung elektrisch verbunden zu sein. Dieses kann Störungen bei der Kommunikation der Kommunikationsvorrichtung über die Hauptleitung verhindern oder minimieren, wenn weitere PLC-Kommunikation zwischen Wandladestation und Fahrzeug zum Einsatz kommt.

Die Kommunikationsvorrichtung ist bevorzugt ausgebildet, elektronischen Daten über eine Datenleitung zu der Wandladestation zu senden. Bei der Datenleitung kann es sich um einen Datenbus, z. B. eine Ethernetverbindung, handeln. Somit kann die Kommunikationsverbindung dazu ausgebildet sein, Bustelegramme in dem Datenbus weiterzuleiten oder elektronische Daten über die Hauptleitung zu empfangen und über einen Datenbus zu senden.

Die Elektrik kann des Weiteren zumindest einen Schalter, insbesondere einen Schutzschalter, und/oder einen Energiezähler umfassen. Ist die Stele für mehrere Wandladestationen ausgebildet, so können für jede Wandladestation jeweils zumindest ein Schutzschalter und/oder ein Energiezähler vorgesehen sein. Bei dem Schutzschalter kann es sich um einen Leitungsschutzschalter oder um einen Fehlerstromschutzschalter oder um einen kombinierten Fehlerstromschutzschalter handeln.

Bevorzugt sind der Überspannungsschutz, die Anklemmvorrichtung und/oder die Kommunikationsvorrichtung bereits in der Stele mechanisch befestigt.

Sind ein Schalter und/oder ein Energiezähler vorhanden, so sind der Schalter und/oder der Energiezähler mechanisch in der Stele befestigt sein.

Es kann vorgesehen sein, dass in der Stele bereits die Anklemmvorrichtung mit zumindest einer Abzweigleitung elektrisch verbunden ist. Bevorzugt ist die Abzweigleitung bereits bei der Stele mit dem Schalter und/oder dem Energiezähler verbunden.

Die als PLC-Modem oder als PLC-Adapter ausgebildete Kommunikationsvorrichtung kann bereits in der Stele mit der Abzweigleitung verbunden sein.

Es kann sein, dass erst am Montageort die Hauptleitung mit der Anklemmvorrichtung verbunden ist. Es kann sein, dass die als Switch ausgebildete Kommunikationsvorrichtung erst am Montageort mit dem Datenbus verbunden wird. Es kann sein, dass erst im Zuge der Montage der Wandladestation zumindest eine elektrische Leitung, insbesondere die erste und/oder die zweite Abzweigleitung und/oder die Datenleitung durch das Trennelement hindurchgeführt wird.

Es kann sein, dass der Innenraum von Seitenwänden umgeben ist. In dem Innenraum kann zumindest eine Seitenwand zumindest teilweise, insbesondere vollständig, von einem Deckel gebildet sein. Hierdurch ist es möglich den Innenraum zu öffnen.

Es kann sein, dass der Fußbereich seitlich öffenbar ausgestaltet ist. Insbesondere kann der Deckel bis zu dem Boden zuzuwendenden Ende der Stele reichen. Dadurch, dass der Fußbereich seitlich geöffnet werden kann, indem eine Seitenwand, insbesondere der Deckel, abgenommen oder verschwenkt wird, ist es möglich, die Stele bei der Installation seitlich über eine aus dem Boden ragende Leitung zu schieben. Hierdurch wird die Installation vereinfacht, dadurch dass die Stele während der Einführung der Leitung im Wesentlichen auf dem Boden verbleiben kann.

Es kann vorgesehen sein, dass der Deckel nur durch einen berechtigten Benutzer abnehmbar oder verschwenkbar ist. Beispielsweise kann der Deckel durch ein Schloss oder ein Schließzylinder gesichert sein.

Es kann sein, dass der Fußbereich Befestigungsmittel umfasst, um die Stele auf dem Boden zu befestigen. Die Befestigungsmittel sind insbesondere nach innen gerichtet. Hierdurch ist es nicht möglich, die Stele zu demontieren, ohne die Stele zu öffnen. Beispielsweise können die Befestigungsmittel als nach innen gerichtete Vorsprünge ausgebildet sein.

Es ist denkbar, dass der Befestigungsbereich gegenüber einer Seitenwand zurückgesetzt ist. Sind der erste und der zweite Befestigungsbereich vorhanden, so können die Befestigungsbereiche jeweils gegenüber einer Seitenwand zurückgesetzt sein.

Bevorzugt ist die Elektrik in einem oder mehreren Gehäusen im Innenraum angeordnet. Hierdurch ergibt sich ein zusätzlicher Schutz der Elektrik. Bevorzugt ist genau ein Gehäuse vorgesehen.

Es kann vorgesehen sein, dass in dem Innenraum Befestigungsmittel angeordnet sind, um das zumindest eine Gehäuse in dem Innenraum zu befestigen. Beispielsweise können in dem Innenraum Schraubbuchsen als Befestigungsmittel angeordnet sein.

Es kann vorgesehen sein, dass das Gehäuse reversibel lösbar in dem Innenraum befestigt ist. Hierdurch ist es möglich, zunächst die Stele ohne Elektrik aufzustellen und erst später, wenn eine Wandladestation an der Stele installiert werden soll, das zumindest eine Gehäuse in dem Innenraum anzuordnen.

Insbesondere wenn genau ein Gehäuse in dem Innenraum vorgesehen ist, so kann es sein, dass an den Befestigungsmitteln wahlweise Gehäuse mit unterschiedlichem Inhalt befestigbar sind. Die Gehäuse unterscheiden sich bevorzugt durch die in dem Gehäuse angeordnete Elektrik. Beispielsweise kann ein Gehäuse der zur Auswahl stehenden Gehäuse die Elektrik für eine Wandladestation enthalten und ein anderes Gehäuse der zur Auswahl stehenden Gehäuse kann die Elektrik für zwei Wandladestationen enthalten. Zusätzlich oder alternativ können mehrere zur Auswahl stehenden Gehäuse jeweils die Elektrik für zwei Wandladestationen enthalten, wobei in einem Gehäuse der zur Auswahl stehenden Gehäuse die Elektrik Fehlerstromschutzschalter umfasst und in einem anderen Gehäuse der zur Auswahl stehenden Gehäuse Fehlerstromschutzschalter fehlen. Hierdurch kann die Elektrik an unterschiedliche Wandladestationen angepasst sein.

Es kann vorgesehen sein, dass die zur Auswahl stehenden Gehäuse mit dem unterschiedlichen Inhalten jeweils an Befestigungsmitteln befestigbar ist, vorzugsweise an denselben Befestigungsmittel. Hierdurch kann ein Gehäuse mit der gesamten vorinstallierten Elektrik ausgetauscht werden, wenn statt einer Wandladestation zwei Wandladestationen installiert werden sollen oder die Art der Wandladestation ausgetauscht werden soll. So kann der Hersteller jeweils ein Gehäuse mit der Elektrik für eine Wandladestation und ein Gehäuse mit der Elektrik für zwei Wandladestationen bereithalten oder ein Gehäuse für eine erste Art Wandladestation und ein Gehäuse für eine zweite Art Wandladestation bereithalten. Beispielsweise können sich die erste Art und die zweite Art der Wandladestationen durch die Anzahl der gleichzeitig durch die Wandladestation aufladbaren Kraftfahrzeuge unterscheiden. Vor Ort muss der Installateur nur die Gehäuse austauschen, ohne einen Überspannungsschutz, einen Schalter, eine Anklemmvorrichtung und/oder eine Kommunikationsvorrichtung in das Gehäuse einbringen zu müssen. Vorzugsweise sind die Gehäuse der zur Auswahl stehenden Gehäuse gleich ausgebildet. D. h. die Gehäuse enthalten jeweils nur einen unterschiedlichen Inhalt.

Vorzugsweise ist die gesamte Elektrik für eine Wandladestation bzw. für zwei Wandladestationen in dem Gehäuse angeordnet. Wie bereits geschildert, kann die Elektrik die Klemmen, die zumindest eine Anklemmvorrichtung, die Kommunikationsvorrichtung, den Überspannungsschutz und/oder den Schalter umfassen. Bevorzugt umfasst die Elektrik die Klemmen, die zumindest eine Anklemmvorrichtung, die Kommunikationsvorrichtung, den Überspannungsschutz und den Schalter umfassen.

Das Gehäuse kann einen Gehäusekörper umfassen.

Vorzugsweise ist vorgesehen, dass das Gehäuse, insbesondere der Gehäusekörper, zu den Befestigungsmitteln korrespondierende Befestigungshilfen umfasst, z. B. Durchgangslöcher, um Gegenbefestigungsmittel, z.B. Schrauben, in die Befestigungsmittel einzubringen. Vorzugsweise ist vorgesehen, dass die Befestigungshilfen außen an dem Gehäuse angeordnet sind. Anders ausgedrückt, sind die Befestigungshilfen elektrisch isoliert zu dem Inneren des Gehäuses angeordnet. Bevorzugt umfasst die mechanische Befestigung des Gehäuses in dem Innenraum keine leitfähige, insbesondere metallische, Verbindung durch das Gehäuse in das Innere des Gehäuses. Hierdurch sind die elektrischen Elemente im Inneren des Gehäuses nach außen hin elektrisch isoliert. Beispielsweise sind die Befestigungshilfen zumindest zum Inneren des Gehäuses durch eine elektrisch isolierende Wand getrennt. Z.B. sind die Befestigungshilfen aus Durchgangslöcher in einem aus Kunststoff ausgebildeten Gehäuse ausgebildet.

Die Gegenbefestigungsmittel können insbesondere aus Metall ausgebildet sein. Durch die Ausgestaltung der Befestigungshilfen besteht keine elektrische Verbindung in das Innere des Gehäuses.

Bevorzugt ist vorgesehen, dass das Gehäuse ein Deckelelement umfasst, wobei das Deckelelement nur mit einem Werkzeug von dem Gehäusekörper lösbar ist. Hierdurch ist ein Schutz vor dem Öffnen durch Laien gegeben.

Es kann vorgesehen sein, dass das Deckelelement durch elektrisch leitfähige Deckelgegenbefestigungsmittel, z.B. Schrauben, an dem Deckelgrundkörper, insbesondere an an dem Deckelgrundkörper angeordneten Deckelbefestigungsmitteln, befestigt ist. Bevorzugt sind die Deckelbefestigungsmittel elektrisch isoliert von dem Inneren des Gehäuses angeordnet. Beispielsweise können die Deckelbefestigungsmittel als außenliegendes Gewindeloch in dem Kunststoffgehäuse ausgebildet sein. In einem Ausführungsbeispiel sind die Deckelbefestigungsmittel auf einer Achse mit den Befestigungshilfen angeordnet.

Es kann vorgesehen sein, dass das Gehäuse, insbesondere das Deckelement, zumindest eine Bedienklappe, besonders bevorzugt mehrere Bedienklappen, umfasst. Bevorzugt sind die Bedienklappen verschwenkbar an dem übrigen Gehäuse angeordnet. Die Bedienklappen sind insbesondere werkzeuglos öffenbar, insbesondere verschwenkbar. Bevorzugt ist der bei geöffneter Bedienklappe zugängliche Bereich derart ausgebildet, dass ein Schutzgrad von IPXXC gemäß IEC 60529 oder besser gegeben ist. Hierdurch ist es möglich, dass ein Laie besonders sicher die Elektrik bedienen kann, z. B. einen Schutzschalter betätigen kann.

Das Gehäuse umfasst bevorzugt eine Klappenöffnung. Die Klappenöffnung ist durch die Bedienklappe verschließbar. Bevorzugt ist vorgesehen, dass das Gehäuse derart an der durch die Bedienklappen erreichbare Elektrik angeordnet ist, dass ein Spalt zwischen dem Gehäuse und der Elektrik kleiner gleich 2,5 mm ausgebildet ist. Bevorzugt liegt die Klappenöffnung derart an der Elektrik an, dass der Spalt kleiner gleich 2,5 mm ausgebildet ist.

Zusätzlich oder alternativ kann vorgesehen sein, dass jedes spannungsführende Teil im Inneren des Gehäuses zumindest in einem Abstand von 100 mm von der Klappenöffnung entfernt angeordnet ist. Der maximale Abstand des spannungsführenden Teils zur Klappenöffnung ist durch die räumlichen Ausmaße des Gehäuses gegeben.

Bei der Elektrik, die durch die Bedienklappe erreichbar ist, kann es sich insbesondere um Schutzschalter handeln.

Bevorzugt ist das Gehäuse aus nicht-leitfähigem Material, insbesondere Kunststoff, gefertigt.

Es kann vorgesehen sein, dass das Gehäuse Leitungsdurchführungen, insbesondere Kabelverschraubungen umfasst, um die Hauptleitungsabschnitte in das Gehäuse zu führen, um die zumindest eine Abzweigleitung zu der zumindest einen Wandladestation zu führen und/oder zumindest eine Datenleitung für zumindest eine Wandladestation aus dem Gehäuse herauszuführen. Umfasst die Kommunikationsvorrichtung keinen PLC-Adapter, so kann das Gehäuse Leitungsdurchführungen, insbesondere Kabelverschraubungen, umfassen, um einen Datenbus in das Gehäuse hineinzuführen.

Die Stele kann einen Grundkörper umfassen.

Bevorzugt bildet der Grundkörper Seitenwände um den Innenraum. Der Grundkörper kann bevorzugt von dem Deckel verschließbar sein. Der Grundkörper ist bevorzugt auf der Höhe des Innenraums einseitig offen ausgebildet.

Der Grundkörper ist bevorzugt im Fußbereich einseitig offen ausgebildet. Hierdurch ist die Stele bei der Installation seitlich über die aus dem Boden ragende Leitung schiebbar.

Der Befestigungsbereich kann als eine Befestigungsplatte ausgebildet sein. Die Befestigungsplatte kann reversibel lösbar und abnehmbar an dem Grundkörper befestigt sein. Beispielsweise ist die Befestigungsplatte form- und/oder kraftschlüssig an dem Grundkörper gehalten. Z. B. kann die Befestigungsplatte an dem Grundkörper verschraubt sein oder in eine Nut des Grundkörpers eingreifen. Ebenfalls ist denkbar, dass Vorsprünge, z. B. Bolzen, des Grundkörpers in ein Loch oder in eine Einbuchtung der Befestigungsplatte eingreifen und dort verrastet sind. Sind mehrere Befestigungsbereiche vorgesehen, so sind die Befestigungsbereiche jeweils als eine Befestigungsplatte ausgebildet, die jeweils reversibel lösbar und abnehmbar an dem Grundkörper befestigbar ist.

Sind ein erster und ein zweiter Befestigungsbereich vorgesehen, so kann der erste Befestigungsbereich als eine erste Befestigungsplatte und der zweite Befestigungsbereich als eine zweite Befestigungsplatte ausgebildet sein. Die erste und die zweite Befestigungsplatte sind bevorzugt separat zueinander ausgebildet. Somit sind die erste und die zweite Befestigungsplatte unabhängig voneinander von dem Grundkörper lösbar.

Es kann vorgesehen sein, dass die Stele ausgebildet ist, dass die Befestigungsplatte verschoben werden muss, um die Befestigungsplatte von dem Grundkörper zu lösen.

Bevorzugt ist vorgesehen, dass die Stele ausgebildet ist, dass die Befestigungsplatte bzw. Befestigungsplatten nur von berechtigten Benutzern abnehmbar ist. Beispielsweise ist die Befestigungsplatte bzw. Befestigungsplatten nur mittels eines Spezialwerkzeugs oder nur nach einer Authentifizierung abnehmbar. Eine Authentifizierung kann z. B. dadurch erfolgen, dass ein berechtigter Benutzer einen passenden Schlüssel in einem Schloss oder in einem Schließzylinder dreht.

Beispielsweise kann die Stele eine Abdeckung umfassen. Es kann vorgesehen sein, dass die Abdeckung ein Lösen der Befestigungsplatte, insbesondere ein Verschieben der Befestigungsplatte, verhindert. Somit muss zunächst die Abdeckung von der übrigen Stele gelöst werden, um die Bestigungsplatte zu entfernen. Es kann vorgesehen sein, dass die Abdeckung nur von einem berechtigten Benutzer abnehmbar ist. Beispielsweise ist die Abdeckung nur mittels eines Spezialwerkzeugs lösbar oder mit einer Authentifzierungsvorrichtung, z. B. einem Schloss oder einem Schließzylinder, gesichert.

Der Grundkörper und der Befestigungsbereich bzw. die Befestigungsbereiche sind bevorzugt aus unterschiedlichen Materialien ausgebildet. Bevorzugt ist der Grundkörper aus einem Material mit einem höheren Zug-Elastizitätsmodul als der Befestigungsbereich ausgebildet. Beispielsweise kann der Grundkörper aus Metall, insbesondere aus Stahl ausgebildet sein.

Es kann vorgesehen sein, dass der zumindest eine Befestigungsbereich, insbesondere die zumindest eine Befestigungsplatte, einen höheren thermischen Längenausdehnungskoeffizienten aufweist als der Grundkörper.

Bevorzugt ist vorgesehen, dass die Befestigungsplatte bzw. die Befestigungsplatten mit Spiel an dem Grundkörper befestigt ist. Hierdurch kann insbesondere verhindert werden, dass die Befestigungsplatte sich aufgrund der größeren Wärmeausdehnung verspannt. Beispielsweise liegt das Loch nicht unmittelbar an den Bolzen an.

In einem Ausführungsbeispiel kann der Grundkörper ein gebogenes Blech umfassen.

Die Aufgabe der Erfindung wird auch durch eine Ladebaugruppe mit einer erfindungsgemäßen Stele, wie im Rahmen dieser Offenbarung beschrieben, insbesondere mit einer Stele nach einem der Ansprüche 1 bis 12, und mit zumindest einer an der Stele befestigten Wandladestation gelöst. Es kann vorgesehen sein, dass eine erste Wandladestation an dem ersten und eine zweite Wandladestation dem zweiten Befestigungsbereich befestigt sind.

Die Aufgabe der Erfindung wird auch durch ein Verfahren zur Montage einer erfindungsgemäßen Ladebaugruppe mittels einer erfindungsgemäßen Stele, insbesondere mit einer Stele nach einem der Ansprüche 1 bis 12, gelöst. Die Ladebaugruppe kann wie im Rahmen dieser Offenbarung beschrieben ausgebildet sein. Die Stele kann wie im Rahmen dieser Offenbarung beschrieben ausgebildet sein. Merkmale, die für das Verfahren offenbart sind, gelten dabei auch für die erfindungsgemäße Stele und für die erfindungsgemäße Ladegruppe und umgekehrt.

Das erfindungsgemäße Verfahren umfasst die folgenden Schritte umfasst:
Einbringen von Ausnehmungen in den Befestigungsbereich am Montageort.

Somit kann der Installateur am Montageort, d. h. auf der Baustelle, entscheiden, welche Ausnehmungen notwendig sind, um die Wandladestation an der Stele zu installieren, insbesondere mechanisch zu befestigen und elektrisch anzuschließen.

Bevorzugt werden auf der Baustelle nach dem Befestigen der Stele die Ausnehmungen zur Montage der zumindest einen Wandladestation in den Befestigungsbereich eingebracht. Vorzugsweise sind vor dem Befestigen der Stele auf dem Boden bereits die Elektrik zumindest teilweise installiert.

So ist insbesondere die Anklemmvorrichtung mit der Kommunikationsvorrichtung elektrisch verbunden sein. Ebenfalls können ein Energiezähler und/oder ein Schalter mit der Anklemmvorrichtung elektrisch verbunden sein.

Der Schalter und der Energiezähler können untereinander elektrisch verbunden sein.

Auf der Baustelle schließt der Installateur insbesondere die Hauptleitung an die Anklemmvorrichtung an. Die Abzweigleitung und die Datenleitung muss auf der Baustelle an die Wandladestation angeschlossen werden.

Eventuell muss die Abzweigleitung von einem elektrischen Bauteil, insbesondere dem Schalter oder dem Energiezähler, durch das Trennelement auf der Baustelle gelegt werden oder/und die Datenleitung an die Kommunikationsvorrichtung angeschlossen werden.

Der Installateur kann die Wandladestation an der Stele mechanisch befestigen und elektrisch anschließen.

Die Aufgabe der Erfindung wird auch durch eine Stelen-Set gelöst. Das Stelen-Set umfasst die erfindungsgemäße Stele, wie sie im Rahmen dieser Offenbarung beschrieben ist, insbesondere eine Stele nach einem der Ansprüche 1 bis 3 und 11 bis 12. Die Stele umfasst dabei bevorzugt den zumindest einen Befestigungsbereich, den Fußbereich, den Innenraum und den Grundkörper, wie beschrieben. Das Stelen-Set umfasst des Weiteren mehrere Gehäuse mit jeweils unterschiedlich ausgebildeter Elektrik. Das jeweilige Gehäuse ist insbesondere wie im Rahmen dieser Offenbarung ausgebildet, insbesondere wie in den Unteransprüchen 5 bis 10 beschrieben. Die Gehäuse sind zur wahlweisen Anordnung im Innenraum der Stele ausgebildet sind.

Ausführungsbeispiele der Erfindung werden nachfolgend anhand von Figuren erläutert. Hierbei bezeichnen dieselben Bezugszeichen dieselben funktionalen Elemente in den Figuren. Es zeigen
Figur 1 eine erfindungsgemäße Stele von außen,
Figur 2 die Stele aus Figur 1 mit abgenommenem Deckel und einem abgenommenen Befestigungsbereich, leicht gedreht und
Figur 3 eine Elektrik und ein erster Befestigungsbereich einer erfindungsgemäßen Ladebaugruppe hergestellt aus der erfindungsgemäßen Stele aus Figur 1,
Figur 4 eine Alternative zu dem Aufbau aus Figur 3,
Figur 5 ein Schaltplan eines Teils einer Elektrik der erfindungsgemäßen Ladebaugruppe, hergestellt aus einer erfindungsgemäßen Stele,
Figur 6 ein zweites Ausführungsbeispiel für eine erfindungsgemäße Stele und
Figur 7 eine Detaildarstellung des Ausführungsbeispiels aus Figur 6.

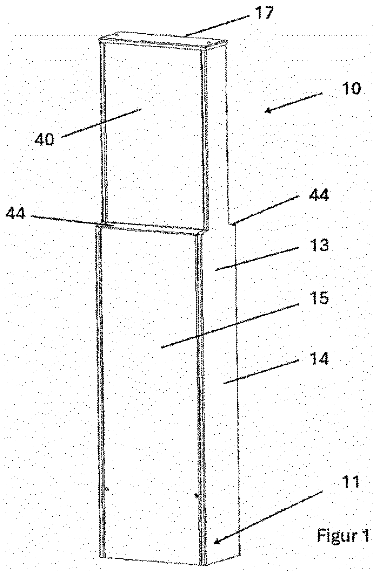

In Figur 1 ist eine erfindungsgemäße Stele 10 dargestellt. Die Stele 10 weist einen Fußbereich 11 zum Befestigen der Stele 10 auf einem Boden auf. Hierdurch kann eine nicht dargestellte Wandladestation für Elektroautos, auch Wallbox genannt, dort installiert werden, wo keine Wand zum Befestigen der Wandladestation in der Nähe ist.

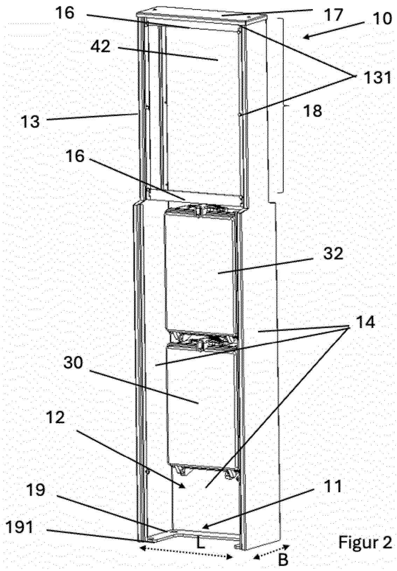

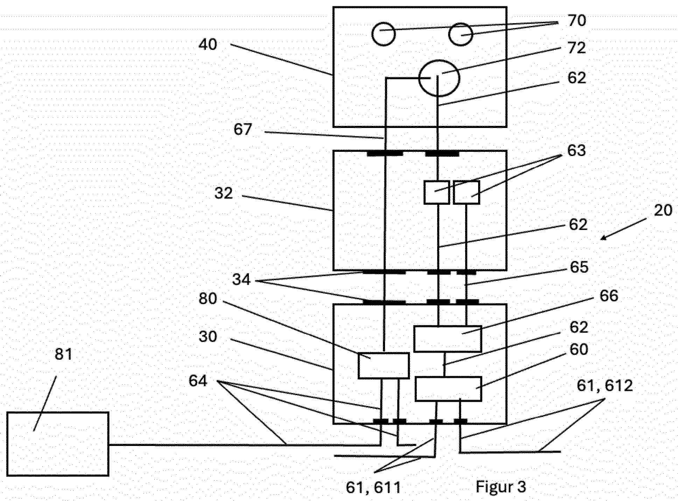

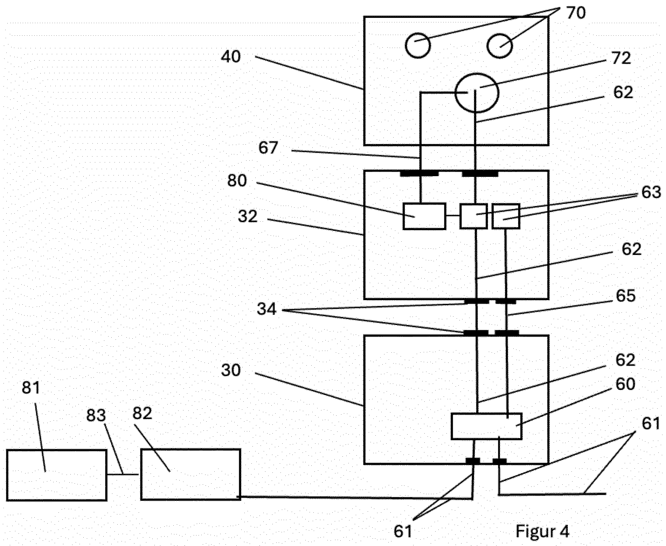

Wie in Figur 2 dargestellt, ist der Fußbereich 11 der Stele 10 nach unten geöffnet. Hierdurch kann eine Hauptleitung 61 durch den Fußbereich 11 in einen Innenraum 12 der Stele 10 (s. Fig. 2) eingeführt werden. Wie in den Figuren 3 und 4 dargestellt, wird die Hauptleitung 61 ebenfalls durch den offenen Fußbereich 11 wieder aus dem Innenraum 12 herausgeführt. In dem Fußbereich 11 sind nach innen vorstehende Vorsprünge 19 angeordnet, um die Stele 10 an dem Boden zu befestigen. Hierzu umfassen die Vorsprünge Befestigungslöcher 191.

Die Vorsprünge 19 sind nach innen gerichtet. Hierdurch muss die Stele 10 zuerst geöffnet werden, um die Stele 10 vom Boden lösen zu können.

Der Innenraum 12 ist von Seitenwänden 14 der Stele 10 umgeben. Eine der Seitenwände 14 ist als ein Deckel 15 ausgebildet (s. Fig. 1). In Figur 2 ist der Deckel 15 entfernt worden, so dass der Innenraum 12 sichtbar ist. Der Innenraum 12 erstreckt sich über die gesamte Länge L und Breite B der Stele 10.

In einem möglichen Ausführungsbeispiel ist der Deckel 15 mittels eines Schlosses oder eines Schließzylinders gesichert, so dass nur berechtigte Personen den Deckel aufklappen oder entfernen können.

Die Stele 10 umfasst einen Grundkörper 13 aus Stahl. Der Grundkörper 13 ist auf der Höhe des Innenraums 12 als abgewinkeltes Blech ausgebildet. Der Grundkörper 13 ist durch den Deckel 15 verschlossen. Der Deckel 15 ist reversibel lösbar, so dass ein Installateur die sich im Innenraum 12 befindliche Elektrik 20 erreichen kann.

Der Deckel 15 ist bis in den Fußbereich 11 ausgebildet. Hierdurch ist das Ende der Stele 10, das im montierten Zustand der Stele mit dem Boden verbunden ist, nach Aufklappen oder Entfernen des Deckels 15 seitlich offen ausgebildet. Hierdurch kann bei der Installation die Stele 10 waagerecht über die Hauptleitung 61 geschoben werden.

Oberhalb des Innenraums 12 ist der Grundkörper 13 rahmenartig ausgebildet, wie in Figur 2 dargestellt, in dem das abgewinkelte Blech durch Streben 16 verbunden und mit einer Abdeckung 17 abgedeckt ist.

An dem rahmenartigen Abschnitt 18 des Grundkörper 13 oberhalb des Innenraums 12 befinden sich eine erste und eine zweite Befestigungsplatte 40, 42 als erster und zweiter Befestigungsabschnitt. In Figur 1 verdeckt die erste Befestigungsplatte 40 die zweite Befestigungsplatte 42, während in Figur 2 die erste Befestigungsplatte 40 entfernt worden ist, so dass die zweite Befestigungsplatte 42 dargestellt ist. Die erste und zweite Befestigungsplatte 40, 42 sind an gegenüberliegenden Seiten der Stele 10 ausgebildet.

Die erste und die zweite Befestigungsplatte 40, 42 sind aus PVC (Polyvinylchlorid) oder aus einem Hochdrucklaminat ausgebildet und weisen ein Zug-Elastizitätsmodul zwischen 1.000 und 50.000 MPa bei Raumtemperatur auf. Hierdurch kann ein Installateur nach dem Aufstellen der Stele 10 in die Befestigungsplatten 40, 42 Ausnehmungen 70, 72 einbringen. Hierzu kann der Installateur einen üblichen Handbohrer verwenden. Die Ausnehmungen 70, 72 sind in den Figuren 3 und 4 dargestellt.

Die Ausnehmungen 70, 72 können in beide Befestigungsplatten 40, 42 eingebracht werden, um eine erste Wandladestation an der ersten Befestigungsplatte 40 und eine zweite Wandladestation 42 an der zweiten Befestigungsplatte 42 zu befestigen. Natürlich ist es auch möglich, nur in eine der Befestigungsplatten 40, 42 Ausnehmungen 70, 72 einzubringen und nur an einer der Befestigungsplatten 40, 42 eine Wandladestation zu befestigen. Die andere Befestigungsplatte 40, 42 bleibt dabei unbearbeitet. Es kann auch sein, dass zuerst nur an einer Befestigungsplatte 40, 42 eine Wandladestation befestigt wird und in einem Zeitabstand, z. B. einigen Monaten oder Jahren, eine weitere Wandladestation an der anderen Befestigungsplatte 40, 42 befestigt wird.

In den Figuren 1 und 2 sind die Befestigungsplatten 40, 42 vor dem Einbringen von Ausnehmungen 70, 72 dargestellt. Hierbei sind die Befestigungsplatten 40, 42 frei von Ausnehmungen 70, 72, die zur Montage der Wandladestation dienen. Hierdurch wird das Innere der Stele 10 besonders gut vor Feuchtigkeit geschützt. Wird nur eine Wandladestation an einer der Befestigungsplatten 40, 42 installiert, so verbleibt die andere Befestigungsplatte 40, 42 frei von Ausnehmungen 70, 72, die zur Montage der Wandladestation dienen. Hierdurch ist im besonderen Maße ein Feuchtigkeitsschutz gegeben.

Dadurch, dass erst bei der Installation die Ausnehmungen 70, 72 eingebracht werden, können unterschiedliche Typen von Wandladestationen an der Stele 10 befestigt werden. Die Ausnehmungen 70, 72 können auf den Typ der zu installierenden Wandladestation abgestimmt sein. Hierzu können dem Installateur auf den Typ der zu installierenden Wandladestation abgestimmte Schablonen an die Hand gegeben werden. Die Ausnehmungen 70, 72 können z. B. nach der Befestigung der Stele 10 an dem Boden eingebracht werden.

Die Befestigungsplatten 40, 42 sind formschlüssig mit dem Grundkörper 13 verbunden. Somit sind die Befestigungsplatten 40, 42 reversibel lösbar mit dem Grundkörper 13 verbunden. Hierzu sind an dem Grundkörper 13 Befestigungselemente 131 vorgesehen. Die Befestigungselemente 131 umfassen jeweils einen Kopf, der die dazugehörige Befestigungsplatte 40, 42 halten kann. Der Kopf der Befestigungselemente 131 dienen dabei als Vorsprünge, die die Befestigungsplatte 40, 42 formschlüssig hält. Die Befestigungsplatte 40, 42 kann dazu korrespondierende Löcher oder Einbuchtungen umfassen, in die Vorsprünge eingeführt werden können. Durch ein Verschieben der Befestigungsplatte 40, 42 können die Vorsprünge in einen Bereich der Löcher bzw. Einbuchtungen gelangen, in denen die Befestigungsplatte 40, 42 hinter die Vorsprünge greift und somit durch die Vorsprünge gehalten wird.

Die Befestigungsplatten 40, 42 sind mit Spiel an der übrigen Stele 10 befestigt. D. h. sowohl in vertikale als auch in horizontale Richtung ist zumindest ein Zwischenraum zwischen der Befestigungsplatte 40, 42 und der übrigen Stele vorgesehen. Hierdurch kann sich die Befestigungsplatte 40, 42 bei Wärme ausdehnen. Die Löcher oder Einbuchtungen liegen zudem nicht unmittelbar an einem Hals der Befestigungselemente 131 an.

Die Befestigungsplatte 40, 42 muss vertikal verschoben werden, damit die Vorsprünge außer Eingriff mit der Befestigungsplatte 40, 42 gelangen und die Befestigungsplatte 40, 42 lösbar ist. Nun kann die Befestigungsplatte 40, 42 durch eine waagerechte Bewegung von dem Grundkörper 13 abgenommen werden.

Das vertikale Verschieben der Befestigungsplatte 40, 42, das benötigt wird, um den Formschluss mit den Vorsprüngen zu lösen, ist durch die Abdeckung 17 verhindert. Die Abdeckung 17 kann durch Befestigungsvorrichtungen, z. B. Schrauben, die nur mittels eines Spezialwerkzeugs gelöst werden können, an dem Grundkörper 13 befestigt sein. Alternativ kann die Abdeckung 17 mittels eines nicht dargestellten Schlosses an dem Grundkörper befestigt sein.

Soll die Wandladestation ausgetauscht und ein anderer Typ Wandladestation an der Stele 10 befestigt werden, so können die Befestigungsplatten 40, 42 ausgetauscht werden. Eine neue Befestigungsplatte 40, 42 ohne Ausnehmung 70, 72 kann an dem Grundkörper 13 befestigt werden. Der Installateur kann nun in die neue Befestigungsplatte 40, 42 erneut Ausnehmungen 70, 72 zur Installation der neuen Wandladestation einbringen.

Der Installateur bringt zum einen Ausnehmungen 70 in die Befestigungsplatten 40, 42 ein, um die Wandladestation an der Stele 10 zu befestigen. Zum anderen bringt der Installateur zumindest eine Ausnehmung 72 ein, um zumindest eine elektrische Leitung zur Wandladestation zu führen.

Die Befestigungsplatten 40, 42 sind gegenüber den Seitenwänden 14 zurückgesetzt. D. h. der rahmenartige Abschnitt 18 ist gegenüber dem Teil der Stele 13, der den Innenraum 12 umschließt, schlanker ausgebildet. Hierdurch bildet sich am unteren Ende der Befestigungsplatten 40, 42 jeweils ein Absatz 44, den die Wandladestation in einer Draufsicht von oben teilweise überdecken kann.

Im Innenraum 12 ist die Elektrik 20 der Stele 10 angeordnet. Die Elektrik 20 befindet sich in Gehäusen 30, 32, die an einer der Seitenwände 14 befestigt sind, wie in Figur 2 dargestellt. In die Gehäuse 30, 32 führen elektrische Leitungen mit Kabelverschraubungen 34, so dass die Elektrik von Nässe außerhalb der Gehäuse 30, 32 abgedichtet ist. Die Gehäuse 30, 32 wirken somit als Trennelement.

Figur 3 zeigt eine grob schematische Anordnung der Elektrik in den Gehäusen 30, 32 und an der Befestigungsplatte 40 bei der fertig montierten Ladebaugruppe, in der die Ausnehmungen 70, 72 bereits eingebracht sind.

Die Kabelverschraubungen 34 sind in Figur 3 als Verdickung in dem Gehäuseumriss der Gehäuse 30, 32 dargestellt. Aus Gründen der Übersichtlichkeit sind in Figur 3 nur zwei Kabelverschraubung 34 der zwölf dargestellten Kabelverschraubungen mit einem Referenzzeichen versehen.

Die Elektrik 20 umfasst eine Anklemmvorrichtung 60, wie in Figur 3 dargestellt. Die Anklemmvorrichtung 60 ist in dem unteren Gehäuse 30 angeordnet.

In die als Klemmen ausgebildete Anklemmvorrichtung 60 werden die Adern einer geschnittenen Hauptleitung 61 eingeführt und wieder ausgeführt. Die Hauptleitung 61 ist in dem Boden verlegt. Mehrere Ladebaugruppen können an derselben Hauptleitung 61 angeschlossen werden. Die Hauptleitung 61 ist in der Regel nicht Teil der Stele 10, sondern nur in der fertig montierten Ladebaugruppe vorgesehen.

Wie in Figur 3 und 4 dargestellt, ist die Hauptleitung 61 in einen ersten Hauptleitungsabschnitt 611 und in einen zweiten Hauptleitungsabschnitt 612 unterteilt. Die Anklemmvorrichtung 60 umfasst Klemmen, um die Hauptleitungsabschnittsenden des ersten und des zweiten Hauptleitungsabschnitts 611, 612 elektrisch zu kontaktieren und damit untereinander zu verbinden. Hierdurch wird eine durchgehende elektrische Leitfähigkeit der Hauptleitung 61 erreicht.

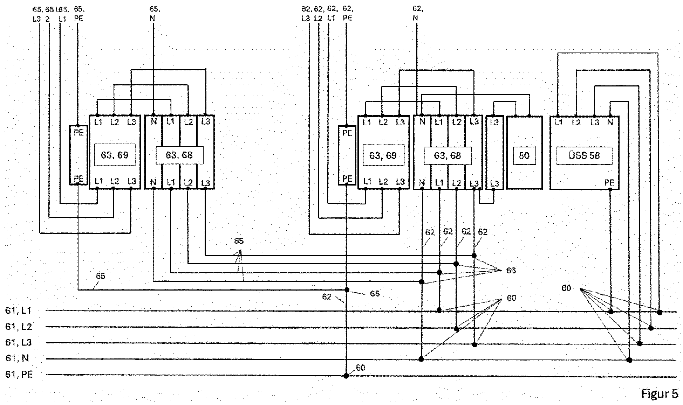

In die Anklemmvorrichtung 60 wird ein Ende einer ersten Abzweigleitung 62 eingeführt und hierdurch mit der Hauptleitung 61 elektrisch verbunden. Die erste Abzweigleitung 62 führt durch eine Kabelverschraubung 34 aus dem Gehäuse 30 heraus. Die erste Abzweigleitung 62 kann mittels Kabelverschraubungen 34 in das obere Gehäuse 32 ein- und wieder herausgeführt werden. In dem oberen Gehäuse 32 können elektrische Bauteile 63 wie Schutzschalter 68 und optional Energiezähler 69 angeordnet sein (s. Figur 5). Zudem kann in den Gehäusen 30, 32 ein Überspannungsschutz 58 für die erste Wandladestation als Bauteil 63 vorgesehen sein. In Figur 3 ist nur ein Bauteil 63 exemplarisch für die erste Abzweigleitung 62 dargestellt. Es können aber auch mehrere elektrische Bauteile 63 für die erste Abzweigleitung 62 vorgesehen sein.

Die erste Abzweigleitung 62 führt bis zu der ersten Befestigungsplatte 40. Nach dem Einbringen einer entsprechenden Ausnehmung 72, wie in Figur 3 dargestellt, wird die erste Abzweigleitung 62 durch die Befestigungsplatte 40 geführt und ist bei der fertig montierten Ladebaugruppe mit der ersten Wandladestation, die in Figur 3 nicht dargestellt ist, elektrisch verbunden.

In Figur 3 ist beispielhaft eine Anklemmeinrichtung 66 dargestellt. Die Anklemmeinrichtung 66 dient dazu, eine zweite Abzweigleitung 65 von der ersten Abzweigleitung 62 für die optionale zweite Wandladestation abzuzweigen. Die zweite Abzweigleitung 65 ist durch Kabelverschraubungen 34 ebenfalls aus dem ersten Gehäuse 30 heraus und in das zweite Gehäuse 32 geführt. In dem zweiten Gehäuse 32 sind ebenfalls zumindest ein elektrisches Bauteil 63 für die zweite Abzweigleitung 65 angeordnet. Hierbei kann es sich um einen Schutzschalter 68, optional einen Energiezähler 69 und/oder einen Überspannungsschutz 58 handeln. In Figur 3 ist nur ein elektrisches Bauteil 63 für die zweite Abzweigleitung 65 dargestellt. Es können aber auch mehrere elektrische Bauteile 63 für die zweite Abzweigleitung 65 vorgesehen sein.

Bei der Ladebaugruppe, deren Elemente in Figur 3 dargestellt ist, ist nur eine Wandladestation vorgesehen. Die zweite Abzweigleitung 65 endet daher in dem zweiten Gehäuse 32 und ist nicht bis zur zweiten Befestigungsplatte 42 verlängert. Hierdurch ist ein oberes Ende der zweiten Abzweigleitung 65 besonders gut vor Korrosion geschützt.

In dem Fall, dass in dem Ausführungsbeispiel der Figur 3 die Ladebaugruppe noch eine zweite Wandladestation umfasst, ist die zweite Abzweigleitung 65 aus dem zweiten Gehäuse 32 bis durch eine Ausnehmung 72 in der zweiten Befestigungsplatte 42 verlängert (nicht dargestellt). Die erfindungsgemäße Stele 10 umfasst des Weiteren in einem der Gehäuse 30, 32 eine Kommunikationsvorrichtung 80. Die Kommunikationsvorrichtung 80 ist ausgebildet, eine kommunikationstechnische Verbindung der Wandladestation zu einer Steuereinrichtung, einem Backendsystem 81 und/oder einer weiteren Ladebaugruppe herzustellen. Hierzu kann ein Datenbus 64, z. B. eine Ethernetverbindung, von dem Boden in den Innenraum 12 geführt und wieder herausgeführt sein, wie in Figur 3 dargestellt. Der Datenbus 64 wird mittels der Kommunikationsvorrichtung 80, die als Switch ausgebildet ist, zu der ersten Wandladestation fortgeführt. Hierbei wird der Abschnitt des Datenbusses 64, der von der Kommunikationsvorrichtung 80 bis zur Wandladestation an der ersten Befestigungsplatte 40 führt, als Datenleitung 67 bezeichnet. Bei der Datenleitung 67 handelt es sich ebenfalls um eine Ethernetverbindung. Die Datenleitung 67 ist durch die Kabelverschraubungen aus dem Gehäuse 30 geführt und optional durch das zweite Gehäuse 32 geführt. Sind eine erste und eine zweite Wandladestation vorgesehen, so führt eine weitere, nicht dargestellte weitere Datenleitung von der Kommunikationsvorrichtung 80 zur zweiten Wandladestation. Der Datenbus 64 kann mehrere Ladestationen miteinander kommunikationstechnisch verbinden.

In Figur 4 ist eine alternative Anordnung zu Figur 3 dargestellt. Im Folgenden werden nur die Unterschiede zu Figur 3 erläutert und im Übrigen auf die Beschreibung zu Figur 3 verwiesen.

In Figur 4 ist die Abzweigeinrichtung 66 entfallen. Vielmehr sind die erste Abzweigleitung 62 und die zweite Abzweigleitung 65 beide an die Anklemmvorrichtung 60 elektrisch angeschlossen.

In Figur 4 ist das Backendsystem 81 über eine kommunikationstechnische Leitung 83 mit einem Powerline-Adapter 82 verbunden. Die kommunikationstechnische Leitung 83 kann z. B. als Datenbus ausgebildet sein. Mittels Powerline-Adapters 82 werden den Daten des Backendsystems 81 auf die Hauptleitung 61 aufmoduliert. Der Powerline-Adapter 82 empfängt zudem elektronische Daten, die auf der Hauptleitung 61 aufmoduliert sind, demoduliert die Daten und sendet die Daten über die kommunikationstechnische Leitung 83 an das Backendsystem 81. Die Kommunikationsvorrichtung 80 in der Stele 10 ist ebenfalls als ein Powerline-Adapter ausgebildet. Hierdurch kann die Kommunikationsvorrichtung 80 elektronische Daten auf die Hauptdatenleitung 61 aufmodulieren. Die Kommunikationsvorrichtung 80 kann elektronische Daten, die auf der Hauptleitung 61 aufmoduliert sind, demodulieren. Mittels der Datenleitung 67, die z. B. als Ethernetverbindung ausgebildet ist, kann die Kommunikationsvorrichtung 80 elektronische Daten zu der Wandladestation senden und von der Wandladestation empfangen. Es ist durch das Aufmodulieren von elektronischen Daten auf die Hauptleitung 61 nicht notwendig, den Datenbus 64 zu verlegen. Vielmehr genügt es, die Ladebaugruppe an die Hauptleitung 61 anzuschließen, um elektronische Daten zwischen der Ladebaugruppe und dem Backendsystem 81 zu übertragen. Sind mehrere Ladebaugruppen an die Hauptleitung 61 angeschlossen und umfassen diese Ladebaugruppen jeweils einen Powerline-Adapter als Kommunikationsvorrichtung 80, so können die Ladebaugruppen untereinander elektronische Daten über die Hauptleitung 61 austauschen. Alternativ oder zusätzlich zum Backendsystem 81 kann auch eine Steuereinrichtung an der kommunikationstechnischen Leitung 83 angeschlossen sein.

Selbstverständlich sind auch ein Ausführungsbeispiel der Erfindung denkbar, in dem die Kommunikationsvorrichtung 80 als Switch gemäß Figur 3 und die Anklemmvorrichtung gemäß Figur 4 ausgebildet ist.

In einem weiteren Ausführungsbeispiel der Erfindung kann die Kommunikationsvorrichtung 80 als PLC-Adapter gemäß Figur 4 und die Anklemmvorrichtung 60 und die Anklemmeinrichtung 62 gemäß Figur 3 vorhanden sein. Für dieses Ausführungsbeispiel zeigt Figur 5 einen Schaltplan.

Wie in Figur 5 dargestellt, ist die Hauptleitung 61 als 5-adrige NYM-Leitung ausgebildet. Von der Hauptleitung 61 wird in der Anklemmvorrichtung 60 die Abzweigleitung 62 abgezweigt. Ferner sind als elektrische Bauteile 63 für die Abzweigleitung 62 ein Energiezähler 69 und ein kombinierter Leitungsschutz- und Fehlerstromschutzschalter 68 vorgesehen. Der Energiezähler 69 dient zum Messen eines im Wesentlichen durch die Wandladestation verursachten Energieverbrauchs. Ferner ist dargestellt, dass die Kommunikationsvorrichtung 80 an den Nullleiter N und an einen Außenleiter L3 der Abzweigleitung 62 und damit indirekt an den Nulleiter N und den Außenleiter L3 der Hauptleitung 61 angeschlossen ist. Alternativ denkbar und nicht dargestellt ist, dass die Kommunikationsvorrichtung 80 an zwei Außenleiter der Hauptleitung 61 angeschlossen ist. In einer weiteren nicht dargestellten Alternative ist die Kommunikationsvorrichtung 80 an einen Außenleiter und den PE-Leiter der Hauptleitung 61 angeschlossen. Die Datenleitung 67, die an die Kommunikationsvorrichtung 80 angeschlossen ist, ist in Figur 5 nicht dargestellt.

Von der ersten Abzweigleitung 62 wird in der Anklemmeinrichtung 66 die zweite Abzweigleitung 65 abgezweigt. Ebenfalls sind für die zweite Abzweigleitung 65 ein Energiezähler 69 und ein kombinierter Leitungsschutz- und Fehlerstromschutzschalter 68 als elektrische Bauteile 63 vorgesehen.

Ein Überspannungsschutz 58 ist an der Anklemmvorrichtung 60 angeschlossen. Der Überspannungsschutz 58 dient dazu, die Wandladestationen und die daran angeschlossenen Elektrofahrzeuge vor Überspannung zu schützen.

Anstelle der kombinierten Leitungsschutz- und Fehlerstromschutzschalter 68 können auch ein Leitungsschutzschalter und ein Fehlerstromschutzschalter als separate Bauteile für die erste und/oder die zweite Abzweigleitung 62, 65 eingesetzt werden.

Beispielsweise können in dem in Figur 5 gezeigten Ausführungsbeispiel die Bauteile 63 und die Anklemmeinrichtung 66 in dem oberen Gehäuse 32 angeordnet sein, während der Überspannungsschutz 58 und die Anklemmvorrichtung 60 in dem unteren Gehäuse angeordnet sind.

Anstelle der Gehäuse 30, 32 kann auch nur ein Gehäuse vorgesehen sein, in dem Elektrik, insbesondere die Anklemmvorrichtung 60, die Anklemmeinrichtung 66, die Bauteile 63, der Überspannungsschutz 58 und die Kommunikationsvorrichtung 80 vorgesehen sind. Anstelle von einem oder mehreren Gehäusen kann zwischen dem rahmenartigen Abschnitt 18 und dem Innenraum 12 eine Wand vorgesehen sein, in der die Leitungen 62, 67 mittels Kabelverschraubungen 34 geführt sind. Es kann sein, dass die zweite Abzweigleitung 65 stets durch das Trennelement, d. h. das Gehäuse oder die Wand in Richtung der zweiten Befestigungsplatte 42 geführt ist.

Die erfindungsgemäße Stele 10 hat die folgenden Vorteile: Im Innenraum 12 ist die Elektrik 20, d. h. die erste Abzweigleitung 62, die zweite Abzweigleitung 65, der Überspannungsschutz 58 und die elektrischen Bauteile 63, untereinander bereits elektrisch verbunden. Ferner kann optional die Kommunikationsvorrichtung 80 bereits mit der Datenleitung 67 verbunden sein. In den Ausführungsbeispielen der Figuren 4 und 5 ist die Kommunikationsvorrichtung 80 bereits mit Adern mit einer der Abzweigleitungen 62, 65 verbunden. Diese elektrischen Verbindungen sind bereits vor dem Transport zu der Baustelle hergestellt. Die elektrischen Bauteile 63, die Anklemmvorrichtung 60, ggf. die Anklemmeinrichtung 66, die Kommunikationsvorrichtung 80 und der Überspannungsschutz 58 können vor dem Transport zu dem Montageort in dem Innenraum 12 mechanisch befestigt sein. Vor der Montage sind die Befestigungsplatten frei von Ausnehmungen für die Montage der Wandladestationen.

Der Installateur muss vor Ort, d. h. auf der Baustelle folgende Arbeiten durchführen: Mittels der Befestigungslöcher 191 muss der Installateur die Stele am Boden befestigen. Der Installateur muss die Hauptleitung 61 in den Innenraum 12 in die Anklemmvorrichtung 60 führen, so dass die Hauptleitung 61 dort elektrisch kontaktiert wird. In dem Ausführungsbeispiel der Figur 3 muss der Installateur ferner den Datenbus 64 aus dem Boden in den Innenraum 12 führen und mit der Kommunikationsvorrichtung 80 elektrisch verbinden.

Des Weiteren muss der Installateur die Ausnehmungen 70, 72 in die erste Befestigungsplatte 40 einbringen und die erste Abzweigleitung 62 und die Datenleitung 67 durch die Ausnehmung 72 führen. Optional muss der Installateur zuvor die Datenleitung mit der Kommunikationsvorrichtung 80 verbinden. Der Installateur kann nun die Wandladestation an den Ausnehmungen 70 mechanisch befestigen und mit den Leitungen 62, 67 verbinden.

Optional, wenn die zweite Wandladestation an der zweiten Befestigungsplatte 62 angeordnet werden soll, kann der Installateur ebenfalls Ausnehmungen 70, 72 in die zweite Befestigungsplatte 40 einbringen. Ebenfalls kann der Installateur die zweite Abzweigleitung 65 aus dem Gehäuse 30, 32 und durch die Ausnehmung 72 führen, um die zweite Wandladestation elektrisch mit der zweiten Abzweigleitung zu verbinden.

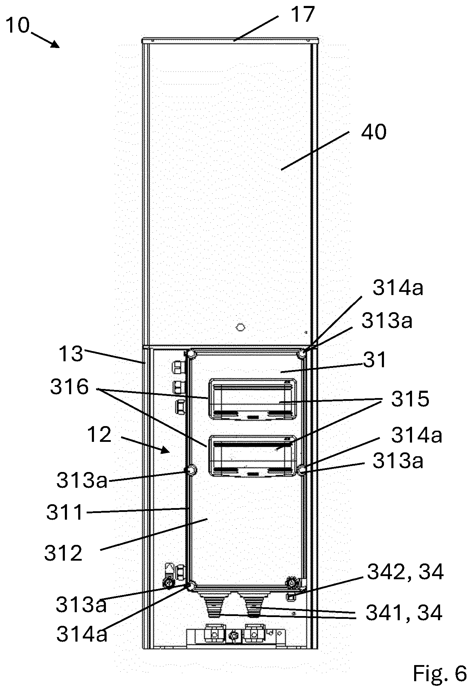

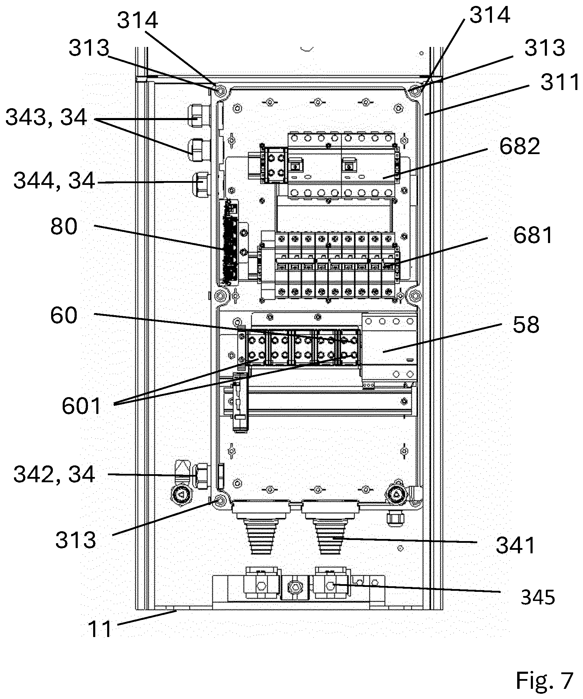

In den Figuren 6, 7 ist ein zweites Ausführungsbeispiel der Erfindung beschrieben. Sofern im Folgenden nicht erwähnt, gelten die Ausführungen des ersten Ausführungsbeispiel ebenfalls für das zweite Ausführungsbeispiel. Insbesondere ist der äußere Aufbau, der in Figur 1 dargestellt ist, in dem zweiten Ausführungsbeispiel identisch.

Figur 6 stellt die Stele 10 des zweiten Ausführungsbeispiels bei geöffneten Deckel 15 dar. Anstelle der beiden Gehäuse 30, 32 ist in dem Ausführungsbeispiel der Figur 6 nur ein Gehäuse 31 in dem Innenraum 12 angeordnet. Das Gehäuse 31 umfasst einen Gehäusekörper 311 und ein Deckelelement 312. Das Gehäuse 31 ist aus Kunststoff ausgebildet.

Das Gehäuse 31 umfasst Befestigungshilfen 313, um im Innenraum 12 an nicht dargestellten, als Gewindebuchsen ausgebildeten Befestigungsmitteln befestigt zu werden. Die Befestigungshilfen 313 sind als Durchgangslöcher ausgebildet, um metallische Befestigungsmittel, z. B. Schrauben 314, durch die Befestigungshilfe 313 in die Befestigungsmittel einzubringen, insbesondere einzuschrauben.

Die Befestigungshilfen 313 sind außen an dem Gehäuse 31 angeordnet. Anders ausgedrückt, ist zwischen dem Inneren des Gehäuses 31 und dem Befestigungshilfen 313 eine elektrisch isolierende Gehäusewand des Gehäuses 31 angeordnet. Hierdurch sind die Befestigungsmittel 314 elektrisch isoliert von dem Inneren des Gehäuses ausgebildet. Hierdurch wird eine Spannungsverschleppung von Innen nach Außen verhindert.

Der Gehäusekörper 311 umfasst Deckelgegenbefestigungsmitteln 313a. Die Deckelgegenbefestigungsmittel 313a sind auf derselben Achse, senkrecht zur Blattebene in den Figuren, wie die Befestigungshilfen 313 angeordnet, so dass die Befestigungshilfen 313 nur bei angenommenen Deckelelement 312 in Figur 7 dargestellt sind. Die Deckelgegenbefestigungsmittel 313a, dienen dazu mittels metallischer Deckelbefestigungsmittel 314, z. B. Schrauben, das Deckelelement 312 and dem Gehäusekörper 311 zu befestigen. Hierbei sind die Deckelgegenbefestigungsmittel 313a von dem Inneren des Gehäuses 31 elektrisch isoliert.

Um in der Stele 10 die Elektrik zu bedienen, umfasst das Gehäuse 31 Bedienklappen 315. Der durch Bedienklappen 315 zugängliche Teil der Elektrik ist werkzeugfrei während des Betriebs erreichbar.

Das Gehäuse 31 umfasst Klappenöffnungen 316. Die hinter den Bedienklappen 315 liegenden Leitungsschutzschalter 681 und Fehlerstromschutzschalter 682 liegen derart an den Klappenöffnungen 316 an, so dass sich kein Spalt oder ein Spalt kleiner gleich 2,5 mm bildet. Hierdurch wird ein Schutzgrad von IPXXC erreicht.

Durch die Befestigungsmittel, die Gegenbefestigungsmittel 314 und die Gegenbefestigungshilfen 313 ist das Gehäuse 31 reversibel lösbar an dem Grundkörper 13 befestigt. Hierdurch ist es möglich, zunächst den Grundkörper 13 mit den Befestigungsplatten 40, 42 aufzustellen und später bei der Installation der Wandladestation das Gehäuse 31 zu installieren.

Die zuvor beschriebene Elektrik 20 ist in dem Gehäuse 31 angeordnet. Ist eine Wandladestation installiert, so kann die Elektrik 20 für genau eine Wandladestation in dem Gehäuse 31 angeordnet sein. Sind zwei Wandladestationen installiert, so kann die Elektrik für beide Wandladestationen in dem Gehäuse 31 angeordnet sein. Soll eine Stele 10 mit einer Wandladestation eine weitere Wandladestation erhalten, so wird das Gehäuse 31 mit der darin enthaltenen Elektrik 20 ausgetauscht. Alternativ kann z.B. die Art der Wandladestation geändert werden. Hierbei wird das Gehäuse 31 mit einer ersten Elektrik 20 gegen ein Gehäuse 31 mit einer zweiten Elektrik 20 ersetzt.

Z. B. kann die erste Elektrik Fehlerstromschutzschalter 682 umfassen, die zweite Elektrik 20 hingegen nicht.

In Figur 7 ist ein Ausschnitt der Stele 10 mit geöffnetem Gehäuse 31 dargestellt. Das in Figur 7 dargestellte Gehäuse 31 umfasst die Elektrik für zwei Wandladestationen. Die Elektrik 20 umfasst eine Kommunikationsvorrichtung 80, eine Anklemmvorrichtung 60, Klemmen 601 zum elektrischen Kontaktieren der Hauptleitung, Leitungsschutzschalter 681, die zugleich als Anklemmeinrichtung dienen, Fehlerstromschutzschalter 682 und den Überspannungsschutz 58.

In Richtung des Fußbereichs 11 sind Kabeldurchführungen 341, 342 an dem Gehäuse 31 angeordnet. Erste Kabeldurchführungen 341 dienen zum Einführen der Hauptleitungsabschnitts 611, 612 in das Gehäuse. Die ersten Kabeldurchführungen 341 sind als Kabeltüllen ausgebildet. Kabelschellen 345 dienen der Zugentlastung der Hauptleitungsabschnitte 611, 612. Die Kabeltülle 341 sind verschiebbar in dem Gehäuse 31 angeordnet. Somit ist es möglich, zunächst die Kabeltüllen 341 an den Hauptleitungsabschnitten 611, 612 zu befestigen und anschließend in das Gehäuse 31 einzuschieben. Zweite Kabeldurchführungen, die als Kabelverschraubungen 342 ausgebildet sind, dienen zum Einführen des Datenbus 64 in das Gehäuse 31.

Im oberen Teil des Gehäuses 31 sind weitere Kabelverschraubungen 34 angeordnet. Hierbei dienen dritte Kabelverschraubungen 343 zum Durchführen von Abzweigleitungen 62. Vierte Kabelverschraubungen 344 dienen zum Durchführen von einer Datenleitung 67 zu den Wandladestationen.

## Patentansprüche

1. Stele (10) für eine Wandladestation zum Aufladen eines elektrischen Kraftfahrzeugs mit einem Fußbereich (11) zum Befestigen der Stele (10) auf einem Boden,
mit einem Innenraum (12) zum Anordnen von elektrischen Leitungen ( 61, 62, 65, 67),
und mit zumindest einem Befestigungsbereich (40, 42) zum Befestigen der Wandladestation an der Stele (10),
**dadurch gekennzeichnet, dass** der Befestigungsbereich (40, 42) derart ausgebildet ist, dass Ausnehmungen (70, 72) zur Montage der Wandladestation in den Befestigungsbereich (40, 42) einbringbar sind.

2. Stele (10) nach Anspruch 1, wobei der Befestigungsbereich (40, 42) mit einem Zug-Elastizitätsmodul von weniger als 50.000 MPa, besonders bevorzugt weniger als 30.000 MPa ausgebildet ist, wobei insbesondere der Befestigungsbereich (40, 42) aus einem Kunststoff oder Hochdrucklaminat ausgebildet ist.

3. Stele (10) nach Anspruch 1 oder 2, wobei die Stele (10) zumindest einen ersten Befestigungsbereich (40) und einen zweiten Befestigungsbereich (42) umfasst, wobei der erste und der zweite Befestigungsbereich (40, 42) jeweils zur Befestigung einer Wandladestation vorgesehen sind, wobei der erste und der zweite Befestigungsbereich (40, 42) an insbesondere gegenüberliegenden Seiten der Stele (10) ausgebildet sind, wobei elektrische Leitungen ( 62, 65, 67) aus dem Innenraum (12) zu dem ersten und dem zweiten Befestigungsbereich (40, 42) führbar sind.

4. Stele (10) nach einem der vorhergehenden Ansprüche, wobei die Stele (10) eine Elektrik (20) für die Wandladestation umfasst, wobei die Elektrik (20) in dem Innenraum (12) angeordnet ist, wobei zwischen dem Befestigungsbereich (40, 42) bzw. den Befestigungsbereichen (40, 42) und der Elektrik (20) ein Trennelement (30, 31, 32) angeordnet ist, um die Elektrik von dem Befestigungsbereich (40, 42) bzw. den Befestigungsbereichen (40, 42) vor Wasser zu schützen.

5. Stele (10) nach Anspruch 4, wobei das Trennelement zumindest einem Gehäuse (30, 31, 32) entspricht, das im Innenraum (12) angeordnet ist, wobei in dem Innenraum (12) Befestigungsmittel angeordnet sind, um das zumindest eine Gehäuse (30, 31, 32) in dem Innenraum (12) zu befestigen, wobei das Gehäuse (30, 31, 32) reversibel lösbar in dem Innenraum (12) befestigt ist.

6. Stele (10) nach Anspruch 5, wobei das Gehäuse (30, 31, 32) zu den Befestigungsmitteln korrespondierende Befestigungshilfen (313) umfasst, wobei die Befestigungshilfen (313) elektrisch isoliert zu dem Inneren des Gehäuses (30, 31, 32) angeordnet sind, wobei insbesondere metallische Befestigungsmittel (314) elektrisch isoliert zu dem Inneren des Gehäuses (30, 31, 32) sind.

7. Stele (10) nach einem der Ansprüche 5 oder 6, wobei das Gehäuse (30, 31, 32) einem Gehäusekörper (311) und ein Deckelelement (312) umfasst, wobei das Deckelelement (312) nur mit einem Werkzeug von dem Gehäusekörper (311) lösbar ist.

8. Stele (10), nach einem der Ansprüche 5 bis 7, wobei das Gehäuse (30, 31, 32) zumindest eine Bedienklappe (315), besonders bevorzugt mehrere Bedienklappen (315), umfasst, wobei die Bedienklappen (315) werkzeuglos öffenbar, insbesondere verschwenkbar, sind, wobei insbesondere das Gehäuse (30, 31, 32) derart an der durch die Bedienklappen (315) erreichbare Elektrik (20) angeordnet ist, dass ein Spalt zwischen dem Gehäuse (30, 31, 32) und der Elektrik (20) kleiner gleich 2,5 mm ausgebildet ist und/oder jedes spannungsführende Teil im Inneren des Gehäuses (30, 31, 32) zumindest in einem Abstand von 100 mm von einer Klappenöffnung (316) entfernt angeordnet ist.

9. Stele (10) nach einem der Ansprüche 4 bis 8, wobei die Elektrik (20) eine Anklemmvorrichtung (60) zum Bilden eines elektrischen Abzweigs von einer Hauptleitung (61) zu der Wandladestation, und/oder einen Überspannungsschutz (58) umfasst.

10. Stele (10) nach einem der Ansprüche 4 bis 9, wobei die Elektrik (20) eine Kommunikationsvorrichtung (80), insbesondere einen Switch und/oder ein Powerline-Modem oder ein Powerline-Adapter, umfasst.

11. Stele (10) nach einem der vorhergehenden Ansprüche, wobei die Stele (10) einen Grundkörper (13) umfasst, wobei der Befestigungsbereich (40, 42) als eine Befestigungsplatte ausgebildet ist, wobei die Befestigungsplatte reversibel lösbar und abnehmbar an dem Grundkörper (13) befestigt ist.

12. Stele (10) nach Anspruch 11, wobei die Stele (10) ausgebildet ist, dass die zumindest eine Befestigungsplatte (40, 42) nur von berechtigten Benutzern abnehmbar ist.

13. Ladebaugruppe mit einer Stele (10) nach einem der vorhergehenden Ansprüche und mit zumindest einer an der Stele (10) befestigten Wandladestation, bevorzugt einer ersten und einer zweiten, an der Stele (10) befestigten Wandladestationen.

14. Verfahren zur Montage einer Ladebaugruppe nach Anspruch 13 mittels einer Stele (10) nach einem der Ansprüche 1 bis 12, wobei das Verfahren die folgenden Schritte umfasst:
• Einbringen von Ausnehmungen (70, 72) in den Befestigungsbereich (40, 42) am Montageort,
• Optional: Elektrisches Verbinden der Hauptleitung (61) an der Anklemmvorrichtung (60).

15. Stelen-Set mit einer Stele (10) nach einem der Ansprüche 1-3, 11, 12 mit mehreren als Gehäuse (31) ausgebildeten Trennelementen, insbesondere nach einem der Ansprüche 4 bis 10, wobei die Gehäuse (31) zur wahlweisen Anordnung im Innenraum (12) der Stele (10) ausgebildet sind, wobei die Gehäuse (31) sich in der in dem Gehäuse (31) angeordneten Elektrik (20) unterscheiden.
